# EUROPÄISCHE PATENTSCHRIFT

(11) **EP 0 765 593 B1**
(45) Veröffentlichungstag und Bekanntmachung des Hinweises auf die Patenterteilung: **08.09.1999**
(21) Anmeldenummer: 95924914.5
(22) Anmeldetag: 22.06.1995
(51) Int. Cl.: H05B 41/392, H05B 41/04

(54) **STEUERUNG FÜR LEUCHTSTOFFLAMPEN**
FLUORESCENT TUBE CONTROL
COMMANDE DE TUBES FLUORESCENTS

(30) Priorität: 22.06.1994 DE 4421736
(43) Veröffentlichungstag der Anmeldung: 02.04.1997
(73) Patentinhaber: PHYSIOMED-Medizintechnik GmbH, 91220 Schnaittach (DE)
(72) Erfinder: NÜTZEL, Wolfgang, D-85283 Wolnzach (DE)
(74) Vertreter: Schneck, Herbert, Dipl.-Phys., Dr.
(86) Internationale Anmeldenummer: EP9502439
(87) Internationale Veröffentlichungsnummer: WO9535646

(56) Entgegenhaltungen:
- EP-A- 0 046 395
- EP-A- 0 078 790
- EP-A- 0 413 991
- EP-A- 0 471 332
- DE-A- 3 009 725

## Beschreibung

Die Erfindung betrifft eine steuerbare Lichtanlage gemäß Oberbegrift von Anspruch 1.

Die Hauptvorteile einer Lichtanlage mit Leuchtstofflampen im Vergleich zu Glühlampen liegen in der höheren Lichtausbeute und der längeren Lebensdauer der Röhren.

Ein weiterer Vorteil von Leuchtstoffröhren gegenüber Glühbirnen liegt in der sehr geringen Trägheit der Entladung, sowie in der Möglichkeit, durch Verwendung geeigneter Leuchtstoffe die Lichtfarbe in weiten Grenzen frei wählen zu können, wodurch sie sich für Lichtanlagen mit rasch wechselnden Licht- und Farbeffekten anbieten, wie dies z.B. in der Leuchtwerbung oder für Signalisierungszwecke erforderlich ist.

Diese genannten Vorteile lassen sich allerdings bei den heute üblichen Lampenschaltungen, die im wesentlichen aus einer mit der Röhre in Serie geschalteten, den Lampenstrom begrenzenden Impedanz und einem im Heizkreis angeordneten handelsüblichen Starter, meist einem Bimetall-Glimmstarter, gebildet werden, nur ungenügend nutzen.

Die hohe sogenannte Einschaltabnutzung schränkt den gegenüber Glühlampen wirtschaftlicheren Betrieb von Lichtanlagen mit Leuchtstofflampen auf solche Einsatzfälle ein, wo über einen längeren Zeitraum keine Änderung der Lichtabgabe verlangt wird.

Es sind viele Versuche unternommen worden, um einerseits den Lampenstart im Sinne einer Lebensdauerverlängerung der Röhren zu optimieren, andererseits den Einsatzbereich von Leuchtstofflampen auch auf solche Anwendungen auszudehnen, bei denen eine in weiten Grenzen flexible zeitliche Steuerung der Lichtabgabe einer Gruppe von Lampen oder einzelner Lampen einer Lichtanlage verlangt wird, wobei die Erstellungskosten nicht wesentlich über denen herkömmlicher Anlagen liegen sollten.

Aus der DE 33 27 189 ist eine Schaltungsanordnung für das Zünden und die Helligkeitssteuerung von Leuchtstofflampen bekannt. Hierbei wird ein elektronischer Schalter im Heizkreis einer mit einer Drossel in Serie liegenden Leuchtstoffröhre aus einem einstellbaren Phasenschieber so angesteuert, daß während jeder Halbwelle der Versorgungswechselspannung zunächst durch die Heizelektroden der Röhre Heizstrom fließt und nach Öffnen des Schalters ein dem vorangegangenen Heizstrom entsprechender induktiver Spannungsimpuls zum Zünden und zum Leuchten für den Rest der Halbwelle führt.

Ein Nachteil der bekannten Anordnung ist die Abhängigkeit der Energie des Zündimpulses vom zum Zeitpunkt des Abschaltens fließenden Heizstrom. Damit ist es nicht möglich, die Höhe des Zündimpulses und die Heizdauer unabhängig voneinander so einzustellen, daß eine für jeden gewünschten Betriebszustand erforderliche Zündimpulsstärke erzeugt wird.

Wie die Praxis zeigt, haben sowohl zu starke, als auch zu schwache Zündimpulse eine Reihe gravierender Nachteile.

Aus der DE 27 02 490 ist eine Steuerung bekannt, die ebenfalls einen elektronischen Schalter im Heizkreis einer Leuchtstoffröhre für die Begrenzung der Leuchtphase und das Vorheizen der Elektroden vorsieht. Es wird darin vorgeschlagen, ein zentrales Steuergerät in einer handelsüblichen Unterputzdose und die Steuerschaltung für jede Röhre jeweils in ein, den Glimmstartern ähnliches Gehäuse unterzubringen.

Ein Nachteil dieser bekannten Anordnung besteht in dem erheblichen Installationsaufwand für eine Lichtanlage, bei der die Lampen unabhängig voneinander gesteuert werden sollen, da jede Lampe zusätzlich zur Energieversorgungsleitung noch mit einer eigenen Steuerleitung mit dem Steuergerät verbunden werden muß. Mit der bekannten Anordnung ist vor allem ein einfaches Nachrüsten herkömmlicher Lichtanlagen deshalb nicht möglich.

Aufgabe der Erfindung ist es, ein Verfahren anzugeben zur unabhängigen Steuerung einzelner oder einer Gruppe von Leuchtstofflampen einer am Wechselstromnetz betriebenen Lichtanlage mit den Hauptfunktionen Zünden, Helligkeitssteuerung (Dimmen), Löschen und Speichern eines Betriebszustandes für das Wiedereinschalten nach Abschalten der Anlage. Dabei besteht ein Merkmal der Aufgabenstellung darin, bereits existierende, herkömmliche Lichtanlagen ohne zusätzlichen Installationsaufwand lediglich durch Austauschen der herkömmlichen Starter durch jeweils eine Steuerschaltung, sowie gegebenenfalls des herkömmlichen Lichtschalters durch einen Signalgeber umzurüsten zu können. Weitere Merkmale der Aufgabenstellung sind es, die überwachung der Funktionsfähigkeit der einzelnen Lampen, die Abschaltung einzelner Lampen bei Defekten, die Beeinflussung des Lampenbetriebs durch angeschlossene Sensoren, sowie eine die Lebensdauer der einzelnen Röhren verlängernde Betriebsweise zu ermöglichen.

Diese Aufgabe wird durch ein Verfahren nach Anspruch 1 gelöst. Weitere vorteilhafte Ausgestaltungen der Erfindung sind in den Unteransprüchen angegeben.

Dabei ergeben sich eine Reihe vorteilhafter Wirkungen:
Durch den Einsatz je eines Signalprozessors mit einem eigenen Steuerprogramm für jede Röhre wird eine Multiprozessor Anordnung mit dezentraler Parallelverarbeitung gebildet, wobei die Synchronisation über die für alle Lampen gemeinsame Netzfrequenz erfolgt. Es lassen sich so bei jeder Röhre individuell die Helligkeitswerte für jede Halbwelle der Versorgungswechselspannung verändern, wodurch auch sehr komplexe und sich schnell ändernde Lichtmuster und bei Verwendung verschiedenfarbiger Röhren auch Farbmuster erzeugt werden können, wie dies z.B. in der Leuchtwerbung verlangt wird.
Eine weitere vorteilhafte Wirkung der Erfindung stellt die Möglichkeit dar, die gesamte Steuerschaltung in ein herkömmliches Startergehäuse einzubauen, wodurch eine erfindungsgemäße Lichtanlage keinen zusätzlichen Installationsaufwand im Vergleich zu einer herkömmlichen Anlage erfordert. Außerdem kann auch eine bestehende Anlage durch Austausch der herkömmlichen Starter auf die erfindungsgemäßen Steuerungsmöglichkeiten umgerüstet werden.

Zur Stromeinsparung können Röhren auch bei angelegter Betriebsspannung vollständig abgeschaltet werden, so daß anders als im Dimbetrieb auch kein Heizstrom mehr fließt.
Ein weiterer Vorteil des erfindungsgemäßen Verfahrens besteht in der Möglichkeit, durch die Ausstattung des Steuerteils mit Sensoren den Ablauf des Steuerprogramms beeinflussen zu können, um so eine Anpassung der Betriebsart an Einflüsse aus der Umgebung zu bewirken, oder auch bestimmte Umweltbedingungen zu signalisieren.
Vorteilhaft ist darüber hinaus die Möglichkeit, die Steuerprogramme in den Steuerteilen über eine Fernsteuerung beeinflussen zu können, wobei eine besonders vorteilhafte Möglichkeit des erfindungsgemäßen Verfahrens, das eine Informationsübertragung über das Versorgungsnetz vorsieht, darin besteht, daß zum Empfang dieser Informationen keine zusätzlichen Hardwarekomponenten, sondern lediglich ein zusätzliches Unterprogramm in der Steuersoftware erforderlich ist.

Ausführungsbeispiele der Erfindung sind in den Zeichnungen dargestellt und werden im folgenden näher beschrieben.

Es zeigen
- Fig. 1: ein Blockschaltbild einer Lampe mit Steuerteil,
- Fig. 2: ein Blockschaltbild eines Steuerteils für zusätzliche Funktionen,
- Fig. 3: ein Flußdiagramm für die Zündimpulserzeugung,
- Fig. 4: ein Flußdiagramm für die Leuchtzeitbegrenzung,
- Fig. 5: ein Flußdiagramm für das Löschen der Entladung,
- Fig. 6: ein Flußdiagramm für die Auswertung der im Phasensignal enthaltenen Steuersignale,
- Fig. 7: ein Flußdiagramm für die Auswertung der Phasendifferenz aus Fig. 13,
- Fig. 8: ein Schaltbild für eine Ausführungsform eines Steuerteils mit einem handelsüblichen Mikroprozessor als Signalprozessor,
- Fig. 9: ein Schaltbild für ein Steuerteil mit zusätzlichen Funktionen,
- Fig. 10: ein Blockschaltbild für einen in die Versorgungsleitung einschleifbaren Signalgeber,
- Fig. 11: ein Schaltbild für eine Ausführungsform eines einfachen Signalgebers, und
- Fig. 12: Flußdiagramm für das Senden eines Informationsbytes.

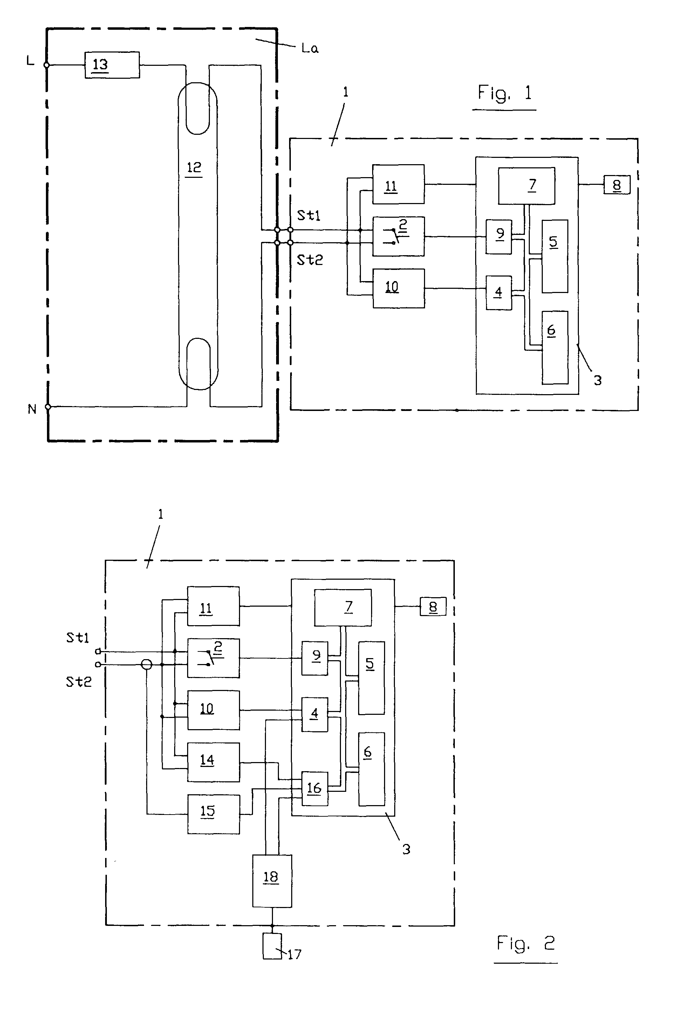

Wie in Fig.1 dargestellt, besteht die Lampe La aus der üblichen Reihenschaltung aus Vorschaltimpedanz 13 zur Strombegrenzung und Leuchtstoffröhre 12 mit vorheizbaren Elektroden. Dabei kann die Vorschaltimpedanz 13 eine Drosselspule oder auch eine Reihenschaltung aus Drosselspule und Kondensator sein, wie dies in der sogenannten Duoschaltung für die Blindstromkompensation Anwendung findet. Über die Klemmen N und L ist die Lampe La parallel mit den übrigen Lampen einer Lichtanlage an die Wechselstrom-Energieversorgung angeschlossen.

St1 und St2 bezeichnen die beiden Klemmen der üblichen, parallel zur Entladungsstrecke der Röhre angeschlossenen Starterfassung. Der übliche Glimmstarter ist bei der erfindungsgemäßen Steuerung durch das Steuerteil 1 ersetzt, das vorzugsweise über einen den Glimmstartern ähnlichen mechanischen Aufbau verfügt. Hierdurch wird die Möglichkeit geschaffen, eine bereits bestehende Lichtanlage auf ein erfindungsgemäßes Steuerverfahren durch Austausch der Glimmstarter gegen erfindungsgemäße Steuerteile umzustellen.

Das Steuerteil 1 besteht in seiner Grundausführung aus einem, den Anschlüssen St1 und St2 parallelgeschalteten, elektrisch steuerbaren Leistungsschalter 2, durch den in seinem eingeschalteten Zustand der durch die Vorschaltimpedanz 13 begrenzte Heizstrom fließt und der dabei die Entladungsstrecke zwischen den Röhrenelektroden niederohmig überbrückt, wodurch die Röhrenspannung auf Werte weit unter der Brennspannung abgesenkt wird. Durch Einschalten des Leistungsschalters werden also die Funktionen Löschen einer bestehenden Gasentladung und Heizen der Lampenelektroden erreicht.

Durch Ausschalten des Leistungsschalters 2 wird der Heizstrom unterbrochen und die niederohmige Überbrückung der Entladungsstrecke aufgehoben, wodurch einerseits die in der Drosselspule gespeicherte und vom Momentanwert des Heizstroms abhängige Energie als Spannungsimpuls an den Röhrenelektroden frei wird, und andererseits ein durch die Drosselspule begrenzter Gasentladungsstrom über die Lampenelektroden fließen kann. Durch Ausschalten des Leistungsschalters 2 werden also die Funktionen Zündimpulserzeugung und Freischalten der Entladungsstrecke erreicht.

Einen weiteren Bestandteil des Steuerteils 1 bildet der Phasendetektor 10, der die Spannung an St1 und St2 in ein phasengleiches Rechtecksignal mit einer für die Weiterverarbeitung geeigneten Amplitude wandelt. Die Flanken dieser Rechteckspannung signalisieren so bei geschlossenem Leistungsschalter 2 die Nulldurchgänge der am Leistungsschalter liegenden Restspannung und damit des Heizstroms. Bei geöffnetem Leistungsschalter und gezündeter Entladung entsprechen die Flanken den Nulldurchgängen des Lampenstroms, sowie bei nicht gezündeter Entladung den Nulldurchgängen der an der Lampe liegenden Versorgungswechselspannung.

Einen weiteren Bestandteil des Steuerteils 1 bildet der Signalprozessors 3. Hierbei kann es sich um einen handelsüblichen einfachen Mikroprozessor oder auch um eine kundenspezifische Integrierte Schaltung handeln, wobei in bekannter Anordnung mindestens die Funktionsblöcke Arithmetik- und Logikeinheit (ALU) 7, Nichtflüchtiger Speicher 5, Speicher mit wahlfreiem Zugriff (RAM) 6, digitale Eingangseinheit 4 und digitale Ausgangseinheit 9 über eine Busstruktur verbunden sind. Der nichtflüchtige Speicher 5 dient zur dauerhaften Speicherung der Steuerprogramme und Betriebsparameter. Die Einheit 8 dient zur Erzeugung des Systemtakts für den Signalprozessor 3.

Ein weiterer Bestandteil des Steuerteils 1 wird durch die Stromversorgung 11 gebildet.

In Fig.2 wird der Aufbau eines Steuerteils 1 für zusätzliche Funktionen gezeigt, wobei einzelne oder alle der zusätzlichen Komponenten je nach Anforderung der zum Einsatz kommenden Steuerprogramme vorgesehen werden.

Zusätzlich zu den Komponenten des Steuerteils nach Fig.1 ist eine Anpassungseinheit 14 vorgesehen, die die an den Anschlüssen Stl und St2 anliegende Spannung so umformt, daß sie einem im Signalprozessor zusätzlich vorhandenen Analog-Digitalwandler 16 zugeführt werden kann. Hierdurch wird die Möglichkeit geschaffen, daß das Steuerprogramm Höhe und zeitlichen Verlauf des Zündimpulses und der Brennspannung an der Röhre 12, sowie bei gelöschter Entladung auch der Versorgungswechselspannung überwacht.

Eine weitere zusätzliche Komponente bildet die Anpassungseinheit 15, die die durch den Leistungsschalter fließende Stromstärke so umformt, daß sie dem im Signalprozessor zusätzlich vorhandenen Analog-Digitalwandler 16 zugeführt werden kann. Hierdurch wird die Möglichkeit geschaffen, daß das Steuerprogramm die Höhe und den zeitlichen Verlauf des Heizstroms durch die Elektroden der Röhre 12 überwacht.

Eine weitere zusätzliche Komponente bildet die Anpassungseinheit 18. Ihre Aufgabe ist es, ein Signal einer an sie angeschlossenen Sensoreinheit 17 so umzuformen, daß es dem Analog-Digitalwandler 16 und/oder der digitalen Eingangseinheit 4 zugeführt werden kann. Hierdurch wird die Möglichkeit geschaffen, daß das Steuerprogramm die Signale der Sensoreinheit 17 überwacht. Beispiele für die Sensoreinheit 17 sind: Temperatursensor, Lichtsensor, Strahlungssensor, Schallsensor, Bewegungssensor, Gassensor, sowie bekannte Empfängerschaltungen, wie sie für die Fernsteuerung von Geräten verwendet werden.

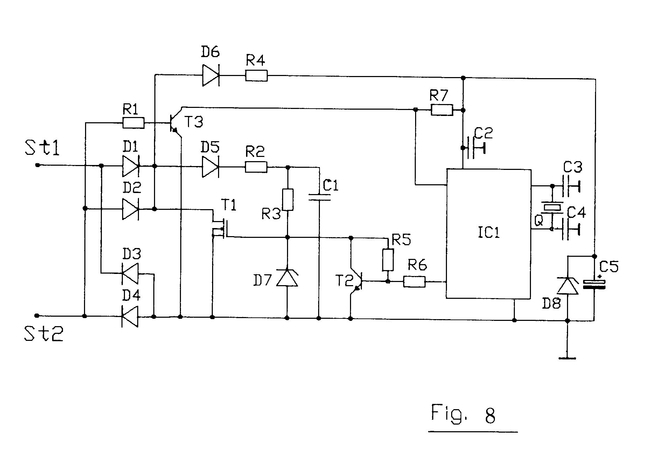

Fig. 8 zeigt ein Beispiel für eine einfache Ausführungsform eines Steuerteils für das erfindungsgemäße Verfahren unter Verwendung eines handelsüblichen Mikroprozessors Ic1. Die Dioden D1 - D4 bilden zusammen mit dem MOS-FET Transistor T1 den Wechselstromleistungsschalter. Eine Zenerdiode D7 am Gate des Transistors T1 verhindert ein Ansteigen der Gatespannung auf unzulässig hohe Werte. Um den Gatespannungsbedarf von T1 zu decken, den die meisten haldelsüblichen High Voltage MOS-FET Transistoren für vollständiges und schnelles Durchsteuern benötigen, ist der Kondensator C1 vorgesehen, der sich im Sperrzustand von T1 über die Diode D5 und den Widerstand R2 auf eine hohe Spannung auflädt. T1 befindet sich im Sperrzustand, wenn der mit seinem Gate verbundene Transistor T2 über R6 aus dem Ic1 Basisstrom erhält, dadurch leitend wird und so das Gate auf annähernd Nullpotential zieht. Wird der Basisstrom aus dem Ic1 abgeschaltet, so geht T2 in den Sperrzustand, sodaß Ladung vom Kondensator C1 über den Widerstand R3 auf das Gate fließt und so T1 in den leitenden Zustand umschaltet. Der Widerstand R5 ist sehr hochohmig und verhindert das Durchschalten von T1 im Moment des Anlegens der Betriebsspannung, solange IC1 noch nicht ordnungsgemäß arbeitet. Der Transistor T3 bildet mit den Widerständen R1 und R7 den Phasendetektor für die an St1 und St2 anliegende Wechselspannung. Die Spannungsversorgung ist wegen der geringen Stromaufnahme des in C-MOS Technik ausgeführten Bausteins Ic1 sehr einfach aufgebaut. Der Kondensator C5 wird während der Sperrphase von T1 über die Diode D6 und den Widerstand R4 geladen, wobei seine Spannung durch die Zenerdiode D8 auf die für Ic1 zulässige Betriebsspannung begrenzt wird. Solange T1 leitet, verhindert D6 ein Abfließen der Kondensatorladung von C5. C3 und C4 dienen zusammen mit dem Resonator Q in bekannter Anordnung der Takterzeugung für Ic1.

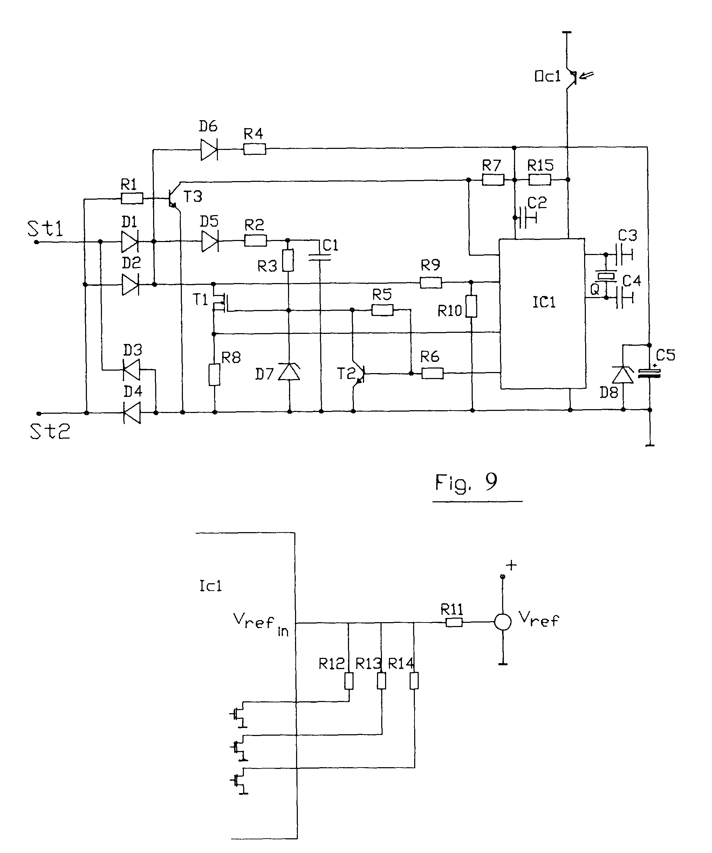

Fig. 9 zeigt ein Beispiel für eine Ausführungsform eines Steuerteils für das erfindungsgemäße Verfahren mit zusätzlichen Funktionen. Darin bildet der im Hauptstromkreis des Leistungsschalters T1 liegende Widerstand R8 eine einfache Anpassungsschaltung, um den Momentanwert der durch den Leistungsschalter T1 fließenden Stromstärke in eine Spannung umzuformen, die von einem im Prozessor Ic1 integrierten Analog-Digitalwandler verarbeitet werden kann. Zusammen mit dem Signal des Phasendetektors als Vorzeichen wird so der Verlauf des Heizstroms durch die Elektroden der Leuchtstoffröhre erfaßbar.

In Fig. 9 bilden die Widerstände R9 und R10 ein Beispiel für eine einfache Anpassungsschaltung, um den Momentanwert der am Drainanschluß des Transistors T1 liegenden Spannung in eine Spannung umzuformen, die von einem im Prozessor Icl integrierten Analog-Digitalwandler verarbeitet werden kann. Zusammen mit dem Signal des Phasendetektors als Vorzeichen wird so der Verlauf der Spannung an den Elektroden der Leuchtstoffröhre erfaßbar.

In Fig. 9 bildet der Optokoppler Oc1 zusammen mit dem Widerstand R15 ein einfaches Beispiel für den Anschluß eines Sensors und die Anpassung seines Ausgangssignals an den Prozessor Ic1. Im gezeigten Beispiel kann der Sensor zum Erfassen der Umgebungshelligkeit, der Lampenhelligkeit oder auch zur Informationsübertragung dienen. Entsprechend können andere Sensortypen zur Erfassung anderer Größen für die Verarbeitung durch die Steuersoftware Verwendung finden.

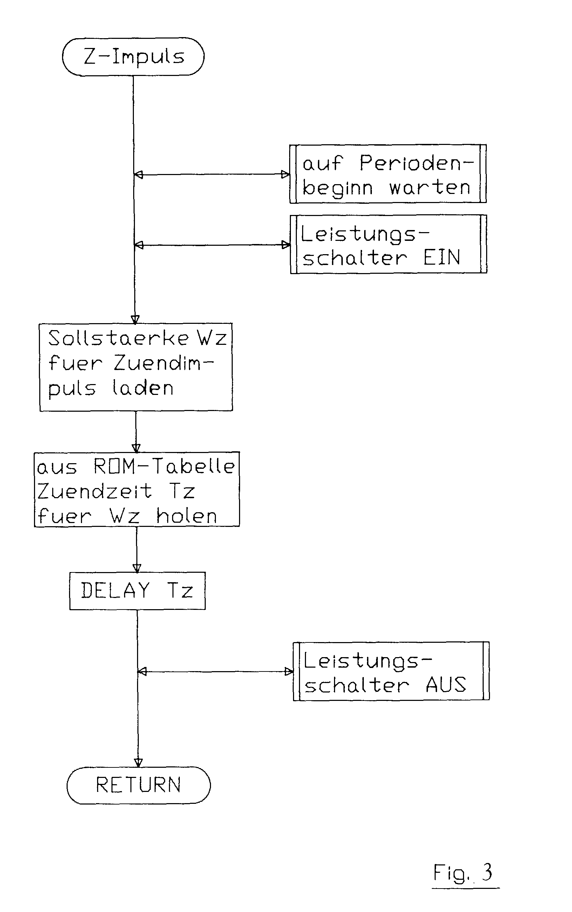

Für die Funktion des Steuerteils ist die im Nichtflüchtigen Speicher des Signalprozessors abgelegte Steuersoftware verantwortlich, wobei von einem Hauptprogramm je nach beabsichtigter Betriebsweise der Lichtanlage in entsprechender Aufeinanderfolge die für die Ausführung der verschiedenen Grundfunktionen des Steuerteils zuständigen Unterprogramme aufgerufen werden. Beispiele für Funktionen, die dem Hauptprogramm zum Aufruf zur Verfügung stehen, sind in den Flußdiagrammen Fig.3 - Fig.7 dargestellt.

Fig.3 zeigt ein Beispiel für ein Unterprogramm zur Erzeugung eines Zündimpulses einer variablen vorgegebenen Sollstärke Wz. Hierbei wird die Tatsache benützt, daß die in der Drosselspule im Abschaltmoment fließende Stromstärke von der Zeit t abhängt, die nach dem Stromnulldurchgang verstrichen ist. Für sinusförmigen Drosselstrom mit dem Spitzenwert isp und der Frequenz f gilt: i=isp*sin(2*pi*f*t). Mit einer im ROM abgelegten Tabelle kann so für jede Lampenleistung die Stromflußzeit Tz bestimmt werden, während der nach dem Stromnulldurchgang der Leistungsschalter eingeschaltet sein muß, um durch sein Ausschalten einen Zündimpuls einer vorgegebenen Sollstärke Wz zu erzeugen.

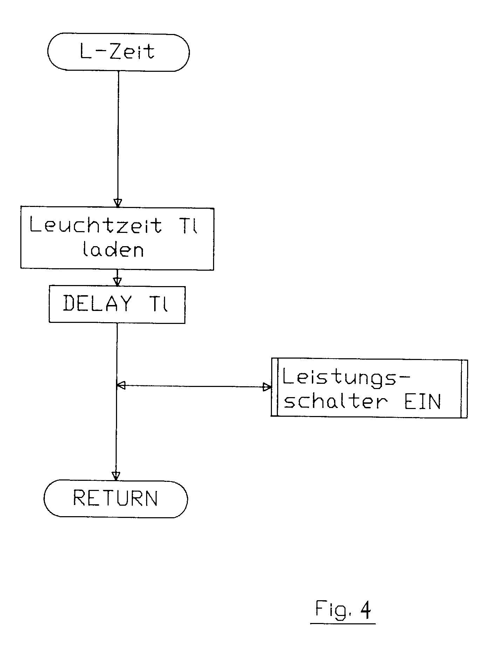

Fig.4 zeigt ein Beispiel für ein Unterprogramm zur Verringerung der Helligkeit der Röhre durch Begrenzung der Leuchtzeit Tl. Hierbei wird die Tatsache benützt, daß durch Einschalten des Leistungsschalters wegen der jetzt niederohmig überbrückten Entladungsstrecke die Brennspannung erheblich unterschritten wird und somit die Entladung verlöscht. Es wirkt sich hierbei vorteilhaft auf die Lebensdauer der Röhre aus, daß durch die Röhrenelektroden weiter Heizstrom fließt, sodaß das Wiederzünden in der nächsten Halbperiode bei ausreichend geheizten Elektroden erfolgt.

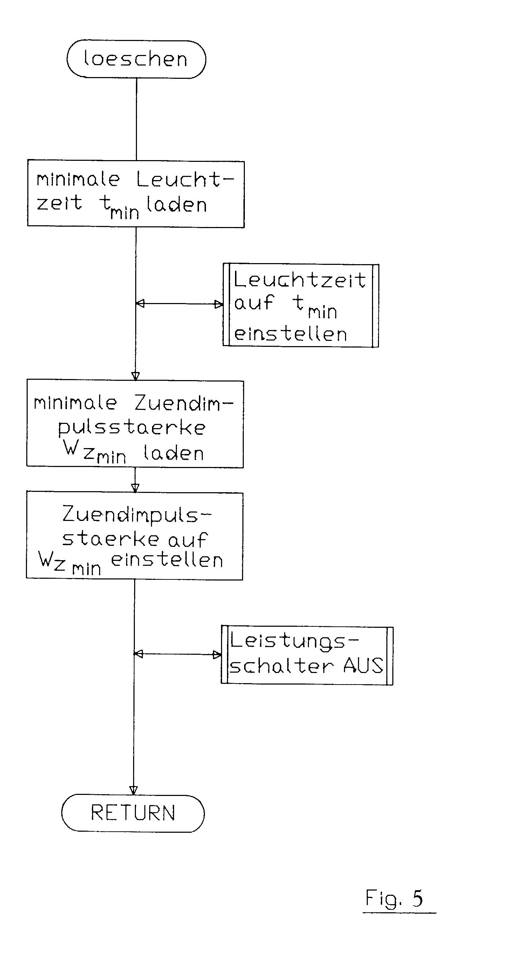

Fig.5 zeigt ein Unterprogramm zum Löschen der Entladung einer Leuchtstoffröhre bei einer Lampe, die an der vollen Betriebsspannung liegt. Dabei wird die Tatsache benützt, daß eine Leuchtstoffröhre, die mit minimaler Helligkeitseinstellung betrieben wird, ohne eine erhöhte Zündspannung verlöscht. Zunächst wird die Röhre auf minimale Helligkeit, d.h. die Leuchtzeit auf den kleinsten Wert tmin eingestellt. Nun wird die Zündimpulsstärke auf ihren kleinsten Wert eingestellt, wodurch die Entladung verlöscht. Nun kann bei weiterhin minimaler Zündimpulsstärke auch die Röhrenheizung abgeschaltet werden.

Die bisher beschriebenen Funktionen stellen Beispiele für Grundfunktionen dar, aus denen sich ein Programm für die Steuerung nach dem erfindungsgemäßen Verfahren zusammensetzen kann. Dadurch ist die Möglichkeit gegeben, für eine Leuchtstoffröhre auch sehr komplexe Abläufe mit einer hohen zeitlichen Dynamik zu steuern, da für jede Halbperiode der Betriebswechselspannung die Lichtemission verändert werden kann.

Werden nun jeweils jeder Röhre einer Lichtanlage Steuerteile mit einem für jede Röhre individuell erstellten Steuerprogramm zugeordnet, und laufen die Steuerprogramme in den einzelnen Steuerteilen miteinander synchron ab, so wird eine Multiprozessorsteuerung mit Parallelverarbeitung geschaffen, mit der für die gesamte Anlage auch sehr komplexe und hoch dynamische Licht- und Farbstrukturen gesteuert werden können. Zur Synchronisation dient die Betriebswechselspannung als Taktsignal, an die alle Lampen parallel angeschlossen sind. Der Programmstart ist über die in jedem Signalprozessor vorhandene Power on Reset Logik synchronisiert.

Je nach konkreter Anwendung und Aufgabe einer erfindungsgemäß gesteuerten Lichtanlage sind weitere Ausbildungen des Verfahrens vorgesehen, um in den Ablauf der Programme in den einzelnen Steuerteilen während des Betriebs eingreifen zu können. Dies soll an einigen Beispielen aufgezeigt werden.

Mit Lichtsensoren zur Erfassung der Umgebungshelligkeit ist es z.B. möglich, Lichtanlagen zu erstellen, die sich automatisch an das sich ändernde Tageslicht anpassen, ohne daß ein zentrales Steuergerät erforderlich wäre. Hierbei ist neben der reinen Helligkeitssteuerung auch eine komplexere Steuerung möglich, die z.B. Tageszeit, Jahreszeit, Wochentag u.s.w. berücksichtigen kann.

Neben dem Eingriff über Sensoren auf die Programme in den Steuerteilen ist in einer weiteren Ausbildung des erfindungsgemäßen Verfahrens auch die Fernsteuerung des Programmablaufs in den einzelnen Steuerteilen vorgesehen. Hierbei werden die Steuerinformationen von einem Signalgeber an einen Signalempfänger im Steuerteil übertragen, wobei drahtlose Übertragungsverfahren wie durch Ultraschall, Licht oder hochfrequente elektromagnetische Wellen ebenso verwendet werden können, wie auch solche, die zur Übertragung eine besondere Signalleitung verwenden. Eine weitere Übertragungsart stellt die Signalübertragung über die Versorgungsleitung, an die alle Lampen angeschlossen sind, dar.

Ein wichtiges Kriterium bei der Auswahl des zur Anwendung kommenden Übertragungsverfahrens bildet hierbei die Tatsache, daß bei einer erfindungsgemäßen Lichtanlage im allgemeinen eine große Zahl von Steuerteilen mit einem Signalempfänger ausgestattet sein muß, dagegen die Anzahl der verwendeten Signalgeber klein ist. Um die Herstellungskosten der Steuerteile gering zu halten, ist es deshalb anzustreben, den Signalempfänger besonders einfach ausführen zu können. An den Signalgeber wird im Hinblick auf die leichte Umrüstbarkeit einer bestehenden herkömmlichen Lichtanlage auf das erfindungsgemäße Steuerverfahren, worin ja eine der Aufgabenstellungen der Erfindung liegt, die Anforderung gestellt, gegen die herkömmlichen Lichtschalter auf einfache Weise austauschbar zu sein. Das erfordert ein Übertragungsverfahren, bei dem es möglich sein muß, den Signalgeber lediglich in eine der Versorgungsleitungen einzuschleifen, da der zweite Pol der Versorgungsspannung im allgemeinen nicht bis zu den Lichtschaltern geführt ist. Dies ist in einer vorteilhaften Ausbildung des erfindungsgemäßen Verfahrens berücksichtigt, bei dem eine Signalübertragung über das Versorgungsnetz zur Anwendung kommt, und bei dem für den Empfang der Signale in den einzelnen Steuerteilen keine zusätzlichen Hardwarekomponenten, sondern lediglich ein zusätzliches Unterprogramm erforderlich ist.

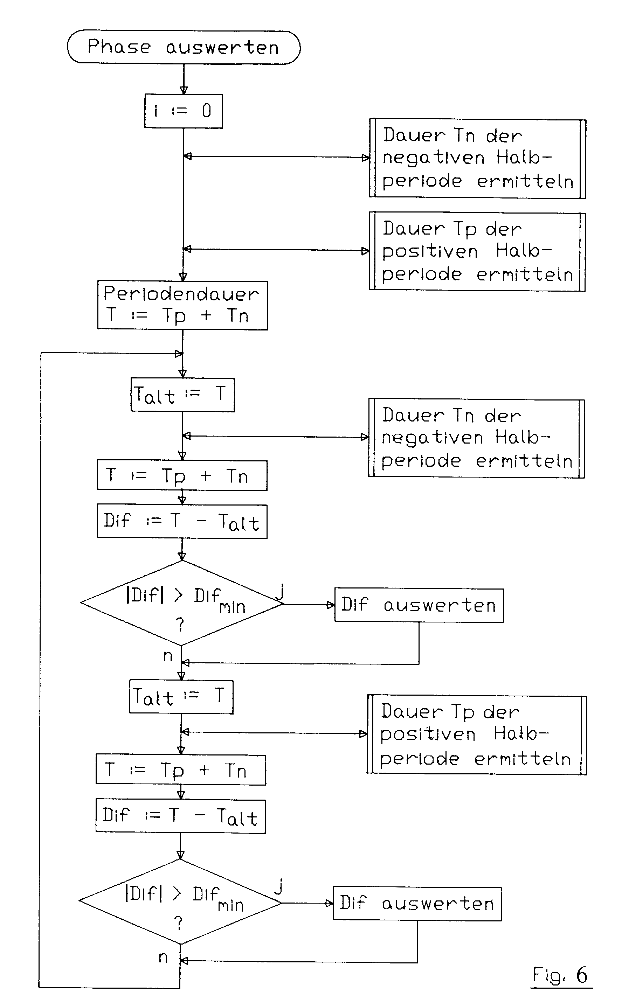

Bei dem verwendeten Übertragungsverfahren werden im Signalgeber die Halbperioden der Versorgungswechselspannung so beeinflußt, daß dadurch eine auswertbare Verschiebung der Nulldurchgänge der Spannung jeweils an den Anschlüssen St1 und St2 der Steuerteile 1 in den einzelnen Lampen der Lichtanlage hervorgerufen wird. Die daraus resultierende Verschiebung der Flanken des Phasendetektorsignals wird durch eine im Hintergrund des Steuerprogramms laufende Programmschleife, für die Fig.6 ein einfaches Beispiel zeigt, ausgewertet.

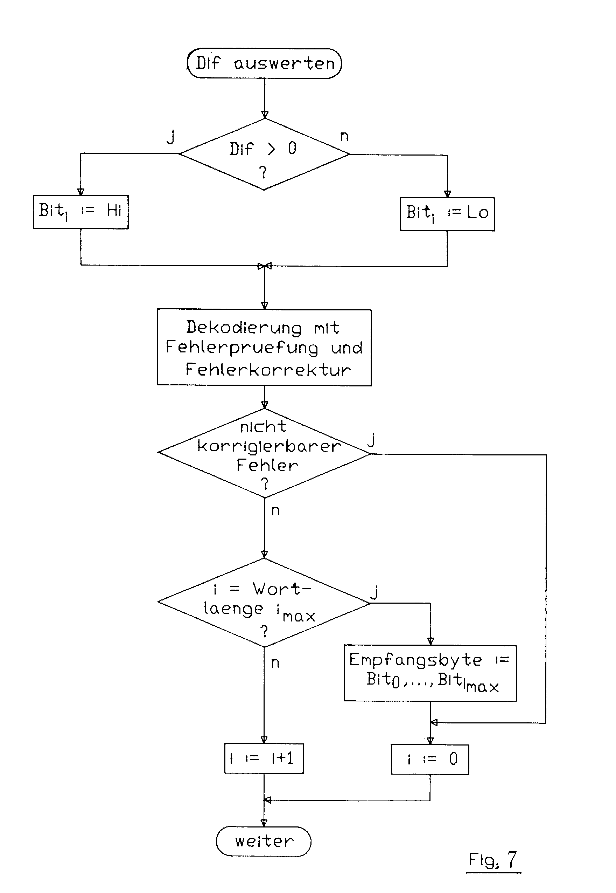

Darin wird jeweils die Dauer Tn bzw. Tp der aktuellen Halbperiode bestimmt und zum Wert Tp bzw. Tn der vorangegangenen Halbperiode entgegengesetzter Polarität addiert. Mit der so erhaltenen aktuellen Periodendauer T und der auf gleiche Weise in der vorausgegangenen Halbperiode ermittelten Periodendauer Talt wird durch Differenzbildung die Phasenverschiebung Dif erhalten. Übersteigt der Absolutwert der Pasenverschiebung Dif einen vorgegebenen Schwellwert Difmin, so wird in einem weiteren Programmsegment, für das Fig.7 ein einfaches Beispiel zeigt, die in der Pasenverschiebung enthaltene Information ausgewertet.

Dabei wird zunächst mit Hilfe des Vorzeichens der Phasenverschiebung der Logikpegel des Empfangsbits Bit_i bestimmt. Darauf wird in bekannter Weise die Dekodierung mit Fehlerprüfung und Fehlerkorrektur vorgenommen und, falls kein nichtkorrigierbarer Fehler vorliegt, das Empfangsbit Bit_i dem zu empfangenden Byte Bit_0,...,Bit_imax zugefügt und der Bitzähler i incrementiert. Dieser Vorgang wird solange fortgesetzt, bis der Bitzähler i anzeigt, daß alle Bits des Empfangsbytes fehlerfrei übermittelt wurden, worauf der Bitzähler i für den Empfang eines neuen Bytes zurückgesetzt wird. Wird ein nichtkorrigierbarer Fehler erkannt, so wird durch Rücksetzen des Bitzählers i der Empfang des aktuellen Bytes abgebrochen.

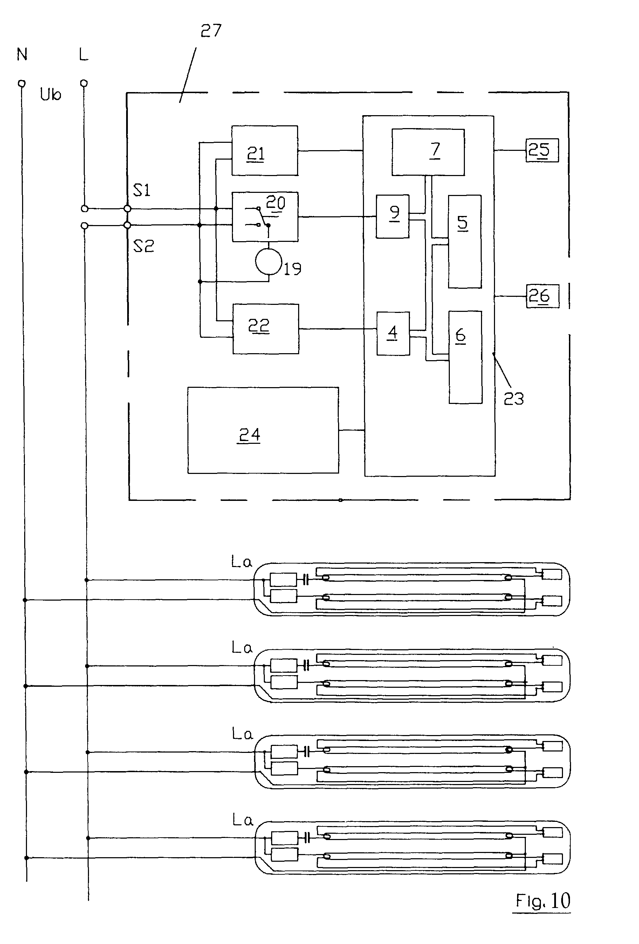

Fig.10 zeigt ein Blockschaltbild für ein Beispiel eines Signalgebers 27, der anstelle eines Lichtschalters über die Klemmen S1 und S2 in eine Wechselstromversorgungsleitung einer Lichtanlage eingeschleift werden kann. Dabei wird die Tatsache benützt, daß sich durch Reihenschaltung einer Spannungsquelle 19 mit gleicher oder entgegengesetzter Polarität zur momentanen Polarität der Versorgungswechselspannung während einer Halbperiode oder eines Teils einer Halbperiode die in jedem Vorschaltgerät umgesetzte Energie dieser Halbperiode vergrößert bzw. verringert, was zu einer entsprechenden Erhöhung bzw. Verringerung der Stromflußzeit und damit zu einer entsprechenden Verschiebung des Stromnulldurchgangs führt. Einen Bestandteil des Signalgebers nach Fig.10 bildet dabei der Leistungsschalter 20. Er überbrückt in seinem ersten Schaltzustand die Anschlußklemmen S1 und S2 niederohmig, in seinem zweiten Schaltzustand verbindet er sie mit der Spannungsquelle 19, die im wesentlichen aus einem Speicherelement wie z.B. einem Kondensator, einer Spule oder einem Akkumulator, oder einem Halbleiterbauelement, wie z.B. einer Diode mit spannungsabhängigem Durchbruchsverhalten bestehen kann. Einen weiteren Bestandteil des Signalgebers 27 bildet der Phasendetektor 22, der die Spannung an S1 und S2 in ein phasengleiches Rechtecksignal mit einer für die Weiterverarbeitung geeigneten Amplitude wandelt. Einen weiteren Bestandteil des Signalgebers 27 bildet der Signalprozessor 23. Hierbei kann es sich um einen handelsüblichen einfachen Mikroprozessor oder auch um eine einfache kundenspezifische Integrierte Schaltung handeln, wobei die Anordnung der Funktionsblöcke denen des Signalprozessors 3 im Steuerteil 1 entsprechen. Die Einheit 25 dient zur Erzeugung des Systemtakts für den Signalprozessor 23, sowie die Einheit 21 zur Stromversorgung. Einen weiteren Bestandteil bildet die Einheit 24. Sie stellt ein Tastenfeld für die Bedienung des Signalgebers dar und kann auch zusätzlich noch ein Anzeigenfeld für Rückmeldungen enthalten. Darüberhinaus kann noch in bekannter Weise ein zusätzlicher Schnittstellenanschluß 26 vorgesehen sein.

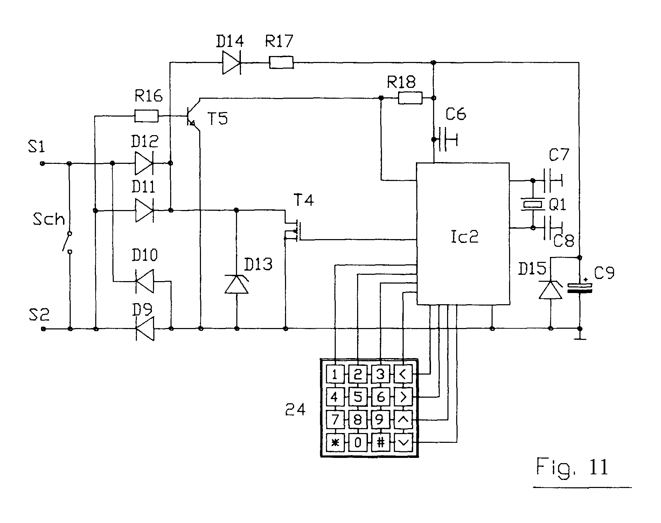

Fig.11 zeigt ein Beispiel für eine einfache Ausführungsform eines Signalgebers für das erfindungsgemäße Verfahren unter Verwendung eines handelsüblichen Mikroprozessors Ic2. Mit dem MOS-FET Leistungstransistor T4 kann die Spannung an S1 und S2, die mit der Betriebsspannung Ub in Serie liegt, zwischen der geringen Durchlaßspannung der Dioden D9 und D12 bzw. D10 und D11 und der Durchbruchspannung der Leistungszenerdiode D13 umgeschaltet werden. Bei eingeschaltetem Leistungsschalter T4 liegt also ungefähr die Betriebswechselspannung Ub an den Lampen La, bei ausgeschaltetem Leistungsschalter dagegen ungefähr die um die Durchbruchspannung von D13 verminderte Betriebsspannung. Durch Schließen eines mechanischen Schalters Sch in den Betriebspausen des Signalgebers werden unnötige Verluste und damit verbundene Erwärmung vermieden.

Der Transistor T5 bildet mit den Widerständen R16 und R18 den Phasendetektor für die an S1 und S2 anliegende Wechselspannung. Die Spannungsversorgung ist wegen der geringen Stromaufnahme des in CMOS Technik ausgeführten Bausteins Ic2 sehr einfach aufgebaut. Der Kondensator C9 wird während der Sperrphase von T4 über die Diode D14 und den Widerstand R17 geladen, wobei seine Spannung durch die Zenerdiode D15 auf die für Ic2 zulässige Betriebsspannung begrenzt wird. Solange T4 leitet, verhindert D14 ein Abfließen der Kondensatorladung von C9. C7 und C8 dienen zusammen mit dem Resonator Q1 in bekannter Anordnung der Takterzeugung für Ic2.

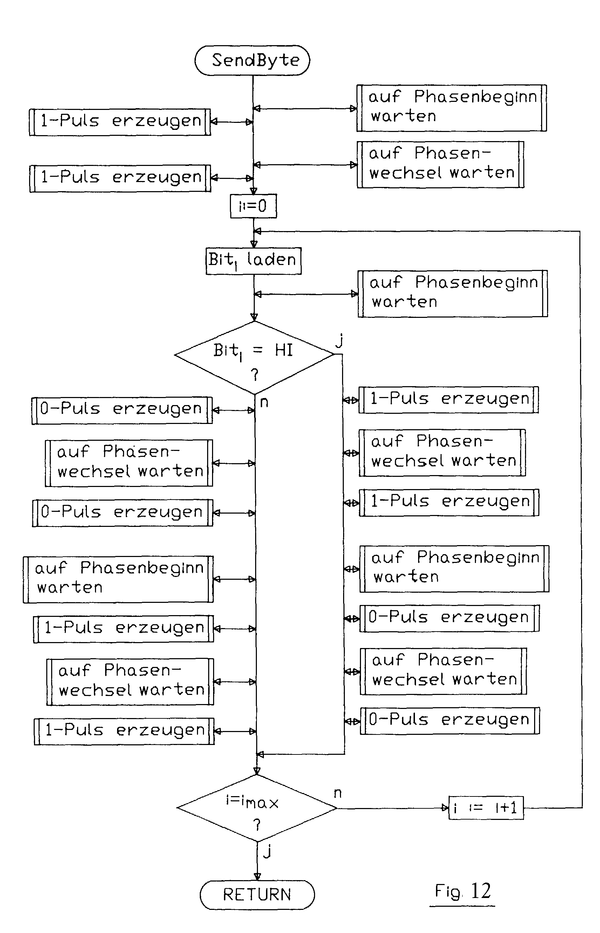

Für die Funktion des Signalgebers 27 ist die im Nichtflüchtigen Speicher 5 des Signalprozessors 23 abgelegte Steuersoftware verantwortlich. Sie besteht neben den hier nicht näher beschriebenen bekannten Routinen zur Kommunikation mit dem Benutzer über ein Tastenfeld 24 und/oder über den optional vorgesehenen Schnittstellenanschluß 26 aus einer Routine nach Fig.23 zur Übertragung eines Datenbytes Bit0,...,Bitimax. Zur Übertragung der Information wird nach jedem Phasenwechsel nach einer Verzögerungszeit tv eine der beiden Spannungen U0 bzw. U1 für die Dauer tp je nach ihrem Vorzeichen zur Betriebswechselspannung addiert bzw. von dieser subtrahiert. Dieser Vorgang wird im Flußdiagramm Fig.12 mit "U0-Puls erzeugen" bzw. "U1-Puls erzeugen" bezeichnet.

Fig.12 stellt ein einfaches Beispiel für die Übertragung eines Sendebytes Bit0, ... Bit_i_max dar, die zunächst mit der Erzeugung eines U1-Pulses für beide Halbperioden einer Periode eingeleitet wird. Darauf werden die einzelnen Bit_i dadurch übertragen, daß für jedes LO-Bit für beide Halbperioden einer Periode jeweils ein U0-Puls und für die beiden Halbperioden der nächsten Periode jeweils ein U1-Puls erzeugt wird. Ein HI-Bit wird entsprechend durch zwei U1-Pulse, gefolgt von zwei U0-Pulsen, übertragen. Neben dem im Beispiel verwendeten können viele andere bekannte Kodierverfahren eingesetzt werden.

Um Übertragungsfehler durch Störungen, die von außen auf das Versorgungsnetz der Lichtanlage übertragen werden, zu vermeiden, besteht neben der Verwendung besonderer Filterschaltungen auch die Möglichkeit, mit einer Softwareroutine nach Fig.6 und Fig.7 das Signal des Phasendetektors im Signalgeber selbst auszuwerten und bei Auftreten eines Fehlers in bekannter Weise eine zusätzliche Information zur Fehlerkorrektur auszusenden.

Darüberhinaus kann über den Phasendetektor im Signalgeber auch Information von anderen Signalgebern, die in der gleichen Lichtanlage verwendet werden, empfangen und ausgewertet werden. In gleicher Weise ist es auch möglich, Signale zu empfangen und auszuwerten, die von einem Steuerteil 1 erzeugt werden. In gleicher Weise wie beim Signalgeber führt eine Veränderung der während einer Halbperiode in einem Vorschaltgerät umgesetzten Energie zu einer mit dem Phasendetektor 22 des Signalgebers 27 meßbaren und im Signalprozessor 23 auswertbaren Phasenverschiebung. Diese Veränderung der umgesetzten Energie wird dabei durch Veränderung der Leuchtzeit während einer Halbwelle bewirkt. Dies ermöglicht es z.B., die Funktionsfähigkeit einer Lampe dadurch zu überwachen, daß durch einen Steuerbefehl des Signalgebers 27 das Steuerteil 1 in dieser Lampe zu einer bestimmten Schaltsequenz veranlaßt wird, die sich in charakteristischer Weise auf das Ausgangssignal des Phasendetektors im Steuerteil auswirkt und so auswerten läßt.

Bei Anwendung entsprechender Übertragungsprotokolle ist bei einer erfindungsgemäßen Lichtanlage ein Datenfluß in jeder Richtung möglich, wobei jeder Signalgeber und jedes Steuerteil über eine individuelle Adresse angesprochen werden kann. Die Datenübertragung dient dabei neben den Steuer- und Überwachungsfunktionen auch dazu, Betriebsparameter im Nichflüchtigen Speicher des Signalprozessors dauerhaft zu speichern und, wenn dafür ein elektrisch löschbarer Nichtflüchtiger Speicher vorgesehen ist, auch zu ändern. Dadurch wird die Möglichkeit geschaffen, eine erfindungsgemäße Lichtanlage an häufig wechselnde Anforderungen anzupassen, und die neuen Einstellwerte dauerhaft abzuspeichern, so daß sie bei jedem Wiedereinschalten sofort zur Verfügung stehen.

Durch die Verwendung elektrisch löschbarar, Nichtflüchtiger Speicher wird außerdem die Möglichkeit geschaffen, die Steuerprogramme in den einzelnen Steuerteilen von jedem Signalgeber aus umprogrammieren zu können. Dadurch wird es z.B. möglich, jederzeit neue Steuerprogramme für neue Licht- und Farbmuster in die einzelnen Steuerteile einer Lichtanlage zu übertragen.

Es ist auch vorgesehen, für die Übertragung größerer Datenmengen in kürzerer Zeit ein Programmiergerät an Stelle der Betriebswechselspannung anzuschließen, das eine im Vergleich zur Netzfrequenz wesentlich höhere Frequenz benützt und gleichzeitig die zur Datenübertragung erforderliche Phasenmodulation erzeugt. Es erhält die Daten ebenfalls über eine Schnittstelle von dem zur Programmentwicklung benützten externen Rechner. Durch eine Frequenzmessung beim Start des Steuerprogramms in jedem Steuerteil 1 kann dann beim Erkennen der hohen Frequenz automatisch in einen besonderen Programmierzustand umgeschaltet werden, der einen Lampenstart verhindert und so die Schnellprogrammierung mit größeren Datenmengen ermöglicht. Wird anschließend wieder die normale Betriebswechselspannung angelegt, so startet die Anlage wieder im Normalbetrieb.

## Patentansprüche

1. Verfahren zur Steuerung von Leuchtstofflampen einer am Wechselstromnetz betriebenen Lichtanlage, wobei jede Lampe aus einer Reihenschaltung einer Impedanz (13) zur Strombegrenzung mit einer Leuchtstoffröhre (12) mit vorheizbaren Elektroden und einem Steuerteil (1) mit einem elektronischen Leistungsschalter (2) umfassend eine Arithmetik- und Logikeinheit (7) für die Funktionen Heizen und Zündimpulserzeugung mit Freischalten der Entladungsstrecke besteht, und wobei das Steuerteil (1) im Heizkreis der Leuchtstoffröhre (12) angeordnet ist, **dadurch gekennzeichnet**, daß das Steuerteil (1) zusätzlich aus einem Signalprozessor (3), der vorzugsweise über die Komponenten digitale Eingangseinheit (4), nichtflüchtiger Speicher (5), Speicher mit wahlfreiem Zugriff (6), Takterzeugung (8) und digitale Ausgangseinheit (9) verfügt, sowie einem Phasendetektor (10) und einer Stromversorgung (11) besteht, wobei mit Hilfe eines im nichtflüchtigen Speicher abgelegten Steuerprogramms und aus den Phaseninformationen des Phasendetektors die Ansteuersignale für den Leistungsschalter für die Betriebsarten Starten und/oder Dimmen und/oder Löschen und/oder Rückmelden erzeugt werden.

2. Verfahren nach Anspruch 1, dadurch gekennzeichnet, daß das Steuerteil zusätzlich über ein Anpassungsteil (14) für die an den Anschlüssen des Steuerteils anliegende Spannung, sowie zusätzlich über ein Anpassungsteil (15) für die durch die Anschlüsse des Steuerteils fließende Stromstärke, sowie der Signalprozessor über einen zusätzlichen Analogeingang sowie einen Analog-Digitalwandler (16) verfügt, über den der angepaßte Spannungs - und Stromstärkewert dem Steuerprogramm verfügbar gemacht werden kann.

3. Verfahren nach Anspruch 1 - 3, dadurch gekennzeichnet, daß das Steuerteil zusätzlich über Sensoren (17) zur Erfassung von Umweltparametern wie der Umgebungstemperatur und/oder der Luftfeuchte und/oder der Helligkeit oder Farbe des Umgebungslichtes und/oder von Schadstoffen und/oder der Anwesenheit oder der Bewegung eines Körpers mit der jeweils entsprechenden Anpassungsschaltung (18), sowie der Signalprozessor über entsprechende Analogeingänge und zugehörige Analog-Digitalwandler oder Digitaleingänge verfügt, über die der Wert der jeweiligen Umweltparameter dem Steuerprogramm verfügbar gemacht werden kann.

4. Verfahren nach Anspruch 1 - 3, dadurch gekennzeichnet, daß das Steuerprogramm über ein Unterprogramm für Röhrentypen mit erhöhtem Zündspannungsbedarf zum Löschen der Entladung verfügt, wobei in einem ersten Schritt die Leuchtzeit auf einen minimalen Wert eingestellt wird, in einem zweiten Schritt die Zündimpulsstärke auf einen minimalen Wert eingestellt wird, wodurch die Entladung verlöscht, und in einem dritten Schritt bei minimaler Zündimpulsstärke die Heizung abgeschaltet wird.

5. Verfahren nach Anspruch 1 - 4, dadurch gekennzeichnet, daß der Ablauf des Steuerprogramms in den einzelnen Steuerteilen durch eine Signalübertragung von einem oder mehreren Signalgebern zu diesen Steuerteilen beeinflußt werden kann, wobei der Signalgeber durch Aussenden einer Adresse das Steuerteil, oder die Gruppe von Steuerteilen, die dieser Adresse zugeordnet sind, für den Empfang und die Auswertung des nachfolgend gesendeten Befehls aktiviert.

6. Verfahren nach Anspruch 5, dadurch gekennzeichnet, daß die Signalübertragung über die Energieversorgungsleitung, an die die Lampen angeschlossen sind, erfolgt, wobei mindestens ein an die Leitung angeschlossener Signalgeber zur Übertragung einer Informationseinheit den Spannungsverlauf mindestens einer Halbperiode der Versorgungswechselspannung so verändert, daß diese Veränderung zu einer entsprechenden Verschiebung der Flanken des Signals des Phasendetektors (10) im Steuerteil (1) führt, und daß das Steuerprogramm im Steuerteil (1) über ein Unterprogramm zur Auswertung der im Signal des Phasendetektors enthaltenen Information verfügt.

7. Verfahren nach Anspruch 6, dadurch gekennzeichnet, daß mindestens ein Signalgeber an Stelle der herkömmlichen Lichtschalter in eine Versorgungsleitung der Lichtanlage oder eines Teils davon eingeschleift wird, der dann zur übertragung einer Informationseinheit den Spannungsverlauf mindestens einer Halbperiode der Versorgungswechselspannung dadurch verändert, daß über seine Anschlußklemmen (S1, S2) ein Leistungsschalter (20) eine zur momentanen Polarität gleichgerichtete oder entgegengerichtete Spannungsquelle (19) für Teile der Halbperiode oder die gesamte Halbperiode in Reihe schaltet, wobei ein von der Spannungsversorgung (21) gespeister Signalprozessor (23) aus dem Signal des Phasendetektors (22), das den Beginn und die Polarität einer Halbperiode signalisiert, und den Daten eines Tastenfeldes (24) und/oder eines optionalen Schnittstellenanschlusses (26) mit Hilfe eines Steuerprogramms die Ansteuersignale für den Leistungsschalter (20) generiert.

8. Verfahren nach Anspruch 6, dadurch gekennzeichnet, daß das Steuerteil (1) als Signalgeber fungiert, wobei es zur Übertragung einer Informationseinheit über die Versorgungsleitung die Leuchtzeit für eine oder mehrere Halbperioden verändert, was ebenfalls zu einer entsprechend auswertbaren Verschiebung der Signalflanken der Phasendetektorsignale führt.

9. Verfahren nach Anspruch 1-8, dadurch gekennzeichnet, daß mindestens ein Teilbereich des Nichtflüchtigen Speichers (5) in den Signalprozessoren (1, 27) aus einem elektrisch löschbaren programmierbaren Speicher (EEPROM) zur Aufnahme und Veränderung von Betriebsparametern und Steuerprogrammen besteht, um so, ohne die Steuerteile auswechseln zu müssen, eine Anpassung einer Lichtanlage an sich ändernde Anforderungen zu ermöglichen.

10. Verfahren nach Anspruch 9, dadurch gekennzeichnet, daß zur Veränderung der Parameter und/oder der Programme die Datenübertragung über die Versorgungsleitung mit einer Programmierspannungsquelle mit wesentlich höherer Frequenz vorgenommen wird, und daß die Steuerteile bei Erkennen dieser hohen Frequenz automatisch in eine Programmierroutine verzweigen, bei der kein Lampenstart erfolgt.

## Claims

1. A method of controlling fluorescent lamps of a lighting system operated by the a.c. power supply, each lamp consisting of a series circuit comprising an impedance (13) for current limitation with a fluorescent tube (12) with preheatable electrodes and a control element (1) with an electronic power switch (2) comprising an arithmetic and logic unit (7) for the functions of heating and igniting pulse production with isolation of the discharge section, and the control element (1) being arranged in the heating circuit of the fluorescent tube (12), wherein the control element (1) additionally has a signal processor (3), which is preferably provided with the components, digital input unit (4), non-volatile memory (5), random access memory (6), clock generation means (8) and digital output unit (9), and a phase detector (10) and a power supply unit (11), the control signals for the power switch for the modes of operation starting or dimming or extinction or feedback being produced by means of a control program deposited in the non-volatile memory and from the phase information of the phase detector.

2. A method according to claim 1, wherein the control element additionally has an adaptation element (14) for the voltage applied to the connections of the control element and an adaptation element (15) for the current strength flowing through the connections of the control element and wherein the signal processor has an additional analogue input and an analogue digital converter (16) by means of which the adapted voltage and current strength value can be made available to the control program.

3. A method according to claim 1 to 2, wherein the control element additionally has sensors (17) for detecting environmental parameters such as the ambient temperature and/or the atmospheric humidity and/or the brightness or colour of the environmental light and/or of pollutants and/or the presence or movement of a body with the respective corresponding adaptation circuit (18), and the signal processor has corresponding analogue inputs and associated analogue digital converters or digital inputs by means of which the value of the respective environmental parameters can be made available to the control program.

4. A method according to claim 1 to 3, wherein the control program has a subroutine for tube types with an increased igniting voltage requirement for extinguishing the discharge, the lighting time being adjusted to a minimum value in a first stage, the igniting pulse strength being adjusted to a minimum value in a second stage so the discharge quenches and the heating being switched off in a third stage with minimum igniting pulse strength.

5. A method according to claim 1 to 4, wherein the sequence of the control program in the individual control elements can be influenced by signal transmission from one or more transducers to these control elements, the transducers activating, by emitting an address, the control element or the group of control elements allocated to this address for receiving and evaluating the subsequently transmitted command.

6. A method according to claim 5, wherein signal transmission takes place via the power supply line to which the lamps are connected, at least one transducer connected to the line for transmitting a unit of information changing the voltage trend of at least one half period of the a.c. supply voltage such that this change leads to a corresponding displacement of the edges of the signal of the phase detector (10) in the control element (1) and wherein the control program in the control element (1) has a subroutine for evaluating the information contained in the signal of the phase detector.

7. A method according to claim 6, wherein at least one transducer is looped instead of the conventional light switch into a supply line of the lighting system or a part thereof which then changes the voltage trend of at least one half period of the a.c. supply voltage for transmitting an information unit, wherein, via its terminals (S1, S2), a power switch (20) connects in series a power source (19) identically or opposingly directed to the instantaneous polarity for parts of the half period or the entire half period, a signal processor (23) supplied by the voltage supply unit (21) generating the control signals for the power switch (20) from the signal of the phase detector (22) which signals the beginning and the polarity of a half period and the data of a keypad (24) and/or of an optional interface connection (26) by means of a control program.

8. A method according to claim 6, wherein the control element (1) acts as a transducer and, for transmitting an information unit via the supply line, changes the lighting time for one or more half periods, which also leads to a correspondingly evaluatable displacement of the signal edges of the phase detector signals.

9. A method according to claim 1 to 8, wherein at least a portion of the non-volatile memory (5) in the signal processors (1, 27) consists of an electrically extinguishable programmable memory (EEPROM) for picking up and changing operating parameters and control programs to allow adaptation of a lighting system to changing requirements without having to exchange the control elements.

10. A method according to claim 9, wherein, for changing the parameters and/or the programs, data transmission is carried out via the supply line with a programming voltage source having a substantially higher frequency and wherein, on detecting this high frequency, the control elements automatically branch into a programming routine in which no lamp start occurs.

## Revendications

1. Procédé pour commander des lampes fluorescentes d'une installation d'éclairage fonctionnant sur le réseau à courant alternatif, chaque tube étant constitué par un circuit série formé d'une impédance (13) servant à limiter le courant avec un tube fluorescent (12) comportant des électrodes pouvant être préchauffées, et par une unité de commande (1) comportant un interrupteur de puissance électronique (2) et comprenant une unité arithmétique et logique (7) pour les fonctions de chauffage et de production d'impulsions d'amorçage avec débranchement de la section de décharge, et l'unité de commande (1) étant disposée dans le circuit de chauffage du tube fluorescent (12), caractérisé en ce que l'unité de commande (1) est constituée en outre par un processeur de signaux (3), qui comporte de préférence les composants incluant une unité d'entrée numérique (4), une mémoire non volatile (5), une mémoire à accès direct (6), une unité de production de cadence (8) et une unité de sortie numérique (9), ainsi que par un détecteur de phase (10) et une unité d'alimentation en courant (11), les signaux de commande pour l'interrupteur de puissance ou les types de fonctionnement démarrage et/ou atténuation et/ou effacement et/ou signalisation en retour étant produits à l'aide d'un programme de commande mémorisé dans la mémoire non volatile et à partir des informations de phase du détecteur de phase.

2. Procédé selon la revendication 1, caractérisé en ce que l'unité de commande comporte en outre une partie d'adaptation (14) pour la tension appliquée aux bornes de la partie de commande, et en outre une partie d'adaptation (15) pour l'intensité du courant passant par les bornes de la partie de commande, et que le processeur de signaux comporte une entrée analogique supplémentaire ainsi qu'un convertisseur analogique/numérique (16), au moyen duquel la valeur adaptée de tension et la valeur adaptée de l'intensité du courant peuvent être fournies au programme de commande.

3. Procédé selon les revendications 1-3, caractérisé en ce que l'unité de commande comporte, en plus de capteurs (17) servant à détecter des paramètres d'environnement tels que la température ambiante et/ou l'humidité de l'air et/ou la luminosité ou la couleur de la lumière ambiante et/ou des substances nocives et/ou la présence ou le déplacement d'un corps, avec le circuit d'adaptation correspondant respectif (18) et que le processeur de signaux comporte des entrées analogique correspondantes et des convertisseurs analogiques-numérique associés ou des entrées numériques associées, au moyen desquels la valeur des paramètres respectifs d'environnement peut être fournie au programme de commande.

4. Procédé selon les revendications 1-3, caractérisé en ce que le programme de commande comporte un sous-programme pour des types de tubes ayant un besoin de tension d'amorçage élevée pour l'effacement de la décharge, auquel cas lors d'une première étape, la durée d'éclairement est réglée sur une valeur minimale, lors d'une seconde étape l'amplitude de l'impulsion d'amorçage est réglée sur une valeur minimale, ce qui arrête la décharge, et lors d'une troisième étape, le chauffage est débranché avec une amplitude minimale de l'impulsion d'amorçage.

5. Procédé selon les revendications 1-4, caractérisé en ce que le déroulement du programme de commande des différents éléments de commande peut être influencé par une transmission de signaux par un ou plusieurs transmetteurs de signaux à ces unités de commande, le générateur de signaux activant, au moyen de l'émission d'une adresse, l'unité de commande ou le groupe d'unités de commande, qui sont associées à cet adresse, pour la réception et l'évaluation de l'instruction émise ultérieurement.

6. Procédé selon la revendication 5, caractérisé en ce que la transmission de signaux s'effectue par l'intermédiaire de la ligne d'alimentation en énergie, à laquelle sont raccordées les lampes, auquel cas au moins un transmetteur de signaux raccordé au conducteur et servant à transmettre une unité d'information, modifie l'allure de la tension d'au moins une alternance de la tension alternative d'alimentation de telle sorte que cette variation conduit à un déplacement correspondant des flancs du signal du détecteur de phase (10) dans l'unité de commande (1), et que le programme de commande dans l'unité de commande (1) comporte un sous-programme pour l'exploitation de l'information contenue dans le signal du détecteur de phase.

7. Procédé selon la revendication 6, caractérisé en ce qu'au moins un transmetteur de signaux est inséré, à la place de l'interrupteur d'éclairage usuel, dans un conducteur d'alimentation de l'installation d'éclairage ou d'une partie de cette installation, ce transmetteur modifiant alors, pour la transmission d'une unité d'information, l'allure de la tension d'au moins une alternance de la tension alternative d'alimentation de telle sorte qu'au moyen de ces bornes de raccordement (S1, S2), un interrupteur de puissance (20) branche en série une source de tension (19), dont la polarité est de même sens ou de sens opposé à la polarité instantanée, pendant des parties de l'alternance ou pendant la totalité de l'alternance, auquel cas un processeur de signaux (23) alimenté par l'unité d'alimentation en tension (21), produit des signaux de commande pour l'interrupteur de puissance (20), à partir du signal du détecteur de phase (22), qui signale le début et la polarité d'une alternance, et à partir des données d'un clavier (24) et/ou un poste d'interface facultatif (26), à l'aide d'un programme de commande, des signaux de commande pour l'interrupteur de puissance (20).

8. Procédé selon la revendication 6, caractérisé en ce que l'unité de commande (1) fonctionne en tant que générateur de signaux, auquel cas pour la transmission d'une unité d'information par l'intermédiaire d'une ligne d'alimentation, cette unité de commande modifie la durée d'éclairage pour une ou plusieurs alternances, ce qui conduit également à un décalage, qui peut être exploité de façon correspondante, des flancs des signaux du détecteur de phase.

9. Procédé selon les revendications 1-8, caractérisé en ce qu'au moins une zone partielle de la mémoire non volatile (5) dans les processeurs de signaux (1, 27) est constituée par une mémoire effaçable et programmable électriquement (EPROM) pour la réception et la modification de paramètres de fonctionnement et de programmes de commande, pour permettre ainsi, sans avoir à remplacer les parties de commande, une adaptation de l'installation d'éclairage à des exigences qui changent.

10. Procédé selon la revendication 9, caractérisé en ce que pour la modification des paramètres et/ou des programmes, la transmission de données est exécutée par l'intermédiaire de la ligne d'alimentation comportant une source de tension de programmation possédant une fréquence nettement accrue, et que lors de l'identification de cette haute fréquence, les parties de commande sont commutées automatiquement sur une procédure de programmation, lors de laquelle aucun amorçage de lampe ne se produit.
